# EUROPEAN PATENT APPLICATION

(11) **EP 4 380 198 A1**
(43) Date of publication of application: **05.06.2024**
(21) Application number: 22903060.6
(22) Date of filing: 27.10.2022
(51) Int. Cl.: H04W 4/02

(54) **UWB ANCHOR POINT, CALIBRATION SYSTEM AND METHOD, AND STORAGE MEDIUM**

(30) Priority: 09.12.2021 CN 202111499234
(71) Applicant: BYD Company Limited, Shenzhen, Guangdong 518118 (CN)
(72) Inventor: QIN, Guilin, Shenzhen, Guangdong 518118 (CN); YANG, Dongsheng, Shenzhen, Guangdong 518118 (CN); WU, Lihua, Shenzhen, Guangdong 518118 (CN); LIU, Juan, Shenzhen, Guangdong 518118 (CN); HOU, Rong, Shenzhen, Guangdong 518118 (CN)
(74) Representative: DehnsGermany Partnerschaft von Patentanwälten
(86) International application number: PCT/CN2022/127928
(87) International publication number: WO 2023/103636

(57) **Abstract**

An Ultra Wide Band (UWB) anchor, a calibration system and method, and a storage medium, relating to the field of UWB technologies. The UWB anchor calibration method includes: obtaining a level status of a pin of a UWB anchor; and determining a location of the UWB anchor according to the level status of the pin of the UWB anchor and a preset correspondence between the level status of the pin of the UWB anchor and the location of the UWB anchor, and outputting the location of the UWB anchor.

## Description

### CROSS-REFERENCE TO RELATED APPLICATION

This application claims priority to and benefits of Chinese Patent Application No. 202111499234.1, filed on December 09, 2021. The entire content of the above-referenced application is incorporated herein by reference.

### FIELD

The present disclosure relates to the field of Ultra Wide Band (UWB) technologies, and specifically to a UWB anchor, a calibration system and method, and a storage medium.

### BACKGROUND

UWB positioning is a new application equipped on passenger vehicles at present. With the use of the UWB positioning technology on a vehicle, positioning of the vehicle can be more precisely implemented, and not only the location of the vehicle can be sensed, but also the locations of other devices nearby can be sensed. In the process of installing a UWB anchor on the vehicle, to realize the self-identification of the location by the UWB anchor, it is necessary to introduce a signal from a main control module or other modules for judgment by the UWB anchor, leading to an excessively complex circuit of the UWB anchor and high wiring harness costs of the vehicle.

### SUMMARY

The present disclosure provides a UWB anchor, a calibration system and calibration method, and a storage medium, to solve the problems of excessively complex circuit of the UWB anchor and high wiring harness costs of the vehicle due to the necessity of outputting a signal from another module to the UWB anchor in the related art.

According to a first aspect, the present disclosure provides a UWB anchor calibration method, including: obtaining a level status of a pin of a UWB anchor, the level status of the pin of the UWB anchor being a low level when the pin of the UWB anchor is grounded, and the level status of the pin of the UWB anchor being a high level when the pin of the UWB anchor is floating; and determining a location of the UWB anchor according to the level status of the pin of the UWB anchor and a preset correspondence between the level status of the pin of the UWB anchor and the location of the UWB anchor, and outputting the location of the UWB anchor.

According to the UWB anchor calibration method in the embodiments of the present disclosure, a level status of a pin of a UWB anchor is obtained. The level status of the pin of the UWB anchor is a low level when the pin of the UWB anchor is grounded, and the level status of the pin of the UWB anchor is a high level when the pin of the UWB anchor is floating. A location of the UWB anchor is determined according to the level status of the pin of the UWB anchor and a preset correspondence between the level status of the pin of the UWB anchor and the location of the UWB anchor, and outputted. Therefore, the self-identification of the location by the UWB anchor is realized through the pin status. Because the pin status of the UWB anchor is used, there is no need to develop a plurality of anchors, the material management and control costs are saved, and calibration can be performed before the vehicle rolls off the assembly line. Compared with the related art, the wiring harness of the vehicle is simplified, wire materials required by anchors are saved, and there is no need to introduce a signal from a main control module or other module for judgment, thereby simplifying the circuit structure of the UWB anchor and reducing the costs of the vehicle.

According to a second aspect, the present disclosure provides a UWB anchor calibration method, including: receiving a level status of a pin of a UWB anchor, the level status of the pin of the UWB anchor being a low level when the pin of the UWB anchor is grounded, and the level status of the pin of the UWB anchor being a high level when the pin of the UWB anchor is floating; and determining a location of the UWB anchor according to the level status of the pin of the UWB anchor and a preset correspondence between the level status of the pin of the UWB anchor and the location of the UWB anchor.

According to the UWB anchor calibration method in the embodiments of the present disclosure, a level status of a pin of a UWB anchor is received. The level status of the pin of the UWB anchor is a low level when the pin of the UWB anchor is grounded, and the level status of the pin of the UWB anchor is a high level when the pin of the UWB anchor is floating. A location of the UWB anchor is determined according to the level status of the pin of the UWB anchor and a preset correspondence between the level status of the pin of the UWB anchor and the location of the UWB anchor. Therefore, the self-identification of the location by the UWB anchor is realized through the pin status. Because the pin status of the UWB anchor is used, there is no need to develop a plurality of anchors, the material management and control costs are saved, and calibration can be performed before the vehicle rolls off the assembly line. Compared with the related art, the wiring harness of the vehicle is simplified, wire materials required by anchors are saved, and there is no need to introduce a signal from a main control module or other module for judgment, thereby simplifying the circuit structure of the UWB anchor and reducing the costs of the vehicle.

According to a third aspect, the present disclosure provides a UWB anchor, including a control module and a pin, the control module being connected to the pin; and the control module being configured to: obtain a level status of the pin, obtain a vehicle body location corresponding to the UWB anchor according to the level status of the pin and a preset correspondence between the level status of the pin and a location of the UWB anchor, and output the vehicle body location corresponding to the UWB anchor, the level status of the pin of the UWB anchor being a low level when the pin of the UWB anchor is grounded, and the level status of the pin of the UWB anchor being a high level when the pin of the UWB anchor is floating.

The UWB anchor according to the embodiments of the present disclosure includes a control module and a pin. The control module is connected to the pin. The control module is configured to: obtain a level status of the pin, obtain a vehicle body location corresponding to the UWB anchor according to the level status of the pin and a preset correspondence between the level status of the pin and a location of the UWB anchor, and output the vehicle body location corresponding to the UWB anchor. The level status of the pin of the UWB anchor is a low level when the pin of the UWB anchor is grounded, and the level status of the pin of the UWB anchor is a high level when the pin of the UWB anchor is floating. Therefore, the problems of excessively complex circuit of the UWB anchor and high wiring harness costs of the vehicle due to the necessity of outputting a signal from another module to the UWB anchor in the related art are solved.

According to a fourth aspect, the present disclosure provides a UWB anchor calibration system, including at least one UWB anchor and a main control module. Each UWB anchor is connected to the main control module by a Controller Area Network (CAN) bus.

The UWB anchor calibration system according to the embodiments of the present disclosure uses the UWB anchor and the main control module to solve the problems of excessively complex circuit of the UWB anchor and high wiring harness costs of the vehicle due to the necessity of outputting a signal from another module to the UWB anchor in the related art.

According to a fifth aspect, the present disclosure provides a UWB anchor calibration system, including at least one UWB anchor and a main control module, the UWB anchor being configured to obtain a level status of a pin and send the level status of the pin to the main control module, the level status of the pin of the UWB anchor being a low level when the pin of the UWB anchor is grounded, and the level status of the pin of the UWB anchor being a high level when the pin of the UWB anchor is floating; and the main control module being configured to obtain a vehicle body location corresponding to the UWB anchor according to the level status of the pin and a preset correspondence between the level status of the pin and a location of the UWB anchor.

The UWB anchor calibration system according to the embodiments of the present disclosure includes at least one UWB anchor and a main control module. The UWB anchor obtains a level status of a pin and send the level status of the pin to the main control module. The level status of the pin of the UWB anchor is a low level when the pin of the UWB anchor is grounded, and the level status of the pin of the UWB anchor is a high level when the pin of the UWB anchor is floating. The main control module obtains a vehicle body location corresponding to the UWB anchor according to the level status of the pin and a preset correspondence between the level status of the pin and a location of the UWB anchor. Therefore, through the UWB anchor and the main control module, the problems of excessively complex circuit of the UWB anchor and high wiring harness costs of the vehicle due to the necessity of outputting a signal from another module to the UWB anchor in the related art are solved.

According to a sixth aspect, the present disclosure provides a computer-readable storage medium. The computer-readable storage medium stores a computer program. The computer program, when executed by a processor, implements the steps of the UWB anchor calibration method.

According to the computer-readable storage medium in the embodiments of the present disclosure, when the computer program stored in the computer-readable storage medium is executed by a processor, the steps of the UWB anchor calibration method are implemented. Therefore, the problems of excessively complex circuit of the UWB anchor and high wiring harness costs of the vehicle due to the necessity of outputting a signal from another module to the UWB anchor in the related art are solved.

Other aspects and advantages of the present disclosure will be given in the following description, some of which will become apparent from the following description or may be learned from practices of the present disclosure.

### BRIEF DESCRIPTION OF THE DRAWINGS

To describe the technical solutions of the embodiments of the present disclosure more clearly, the following briefly introduces the accompanying drawings required for describing the embodiments of the present disclosure. Apparently, the accompanying drawings in the following description show only some embodiments of the present disclosure, and a person of ordinary skill in the art may still derive other drawings from these accompanying drawings without creative efforts.
FIG. 1 is a flowchart of a UWB anchor calibration method according to Embodiment 1 of the present disclosure;
FIG. 2 is a schematic structural diagram of a vehicle according to Embodiment 1 of the present disclosure;
FIG. 3 is a flowchart of a UWB anchor calibration method according to Embodiment 2 of the present disclosure;
FIG. 4 is a schematic structural diagram of a UWB anchor according to Embodiment 3 of the present disclosure; and
FIG. 5 is a schematic structural diagram of a UWB anchor calibration system according to Embodiment 4 of the present disclosure.

### DETAILED DESCRIPTION

The technical solutions in the embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

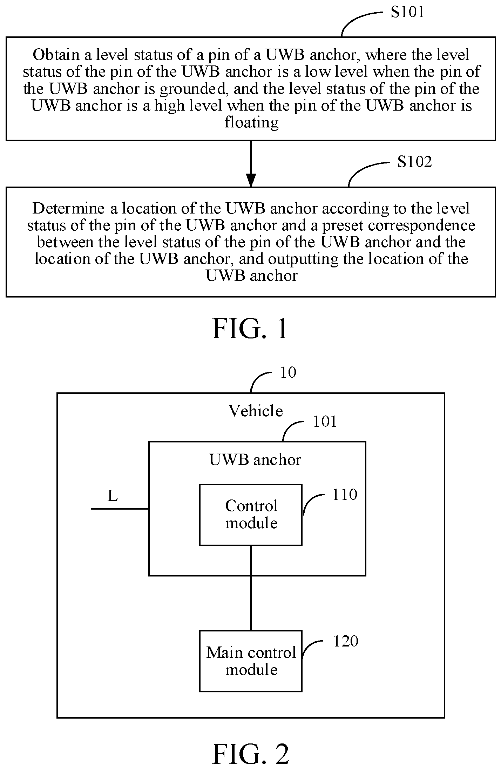

An embodiment of the present disclosure provides a UWB anchor calibration method. As shown in FIG. 1, the UWB anchor calibration method includes the following steps.

In step S101, a level status of a pin of a UWB anchor is obtained, where the level status of the pin of the UWB anchor is a low level when the pin of the UWB anchor is grounded, and the level status of the pin of the UWB anchor is a high level when the pin of the UWB anchor is floating.

As shown in FIG. 2, in an implementation, a UWB anchor 101 and a main control module 120 are arranged in a vehicle 10. This step is performed by a control module 110 in the UWB anchor 10. The control module 110 is connected to the main control module 120. The control module 110 is connected to a pin L. The pin may be connected in different manners. For example, the pin is connected to a low level or a high level or is grounded. In other words, the level status of the pin may be a low level or a high level. Address data corresponding to the low level state is 0 and address data corresponding to the high level is 1.

Step S101 includes:
the level status of the pin of the UWB anchor is a low level when the pin of the UWB anchor is grounded, and the level status of the pin of the UWB anchor is a high level when the pin of the UWB anchor is floating.

To achieve the different levels of the pin, the pin may be connected to a resistor. When the pin is grounded, the level status of the pins is a low level state. When the pin is floating, a voltage drop on the resistor may cause the level status of the pin to be a high level state.

Each UWB anchor includes a first pin and a second pin.

The obtaining the level status of the pin of the UWB anchor includes:
respectively obtaining a level status of the first pin and a level status of the second pin, and arranging the level status of the first pin and the level status of the second pin of the UWB anchor according to a preset order to obtain the level status of the pins.

The number of pins may be two or more, and the preset order is an order of the pins arranged in advance. For example, the pins include the first pin and the second pin, and the preset order is that the level status of the first pin and the level status of the second pin are arranged sequentially. As such, address information is obtained. When the level status of the first pin is 0 and the level status of the second pin is 1, the address information is 01.

In step S102, a location of the UWB anchor is determined according to the level status of the pin of the UWB anchor and a preset correspondence between the level status of the pin of the UWB anchor and the location of the UWB anchor, and outputted.

The address information formed by the level statuses of the pins of the UWB anchor has a correspondence with the vehicle body location, and the vehicle body location of the UWB anchor can be easily obtained according to the correspondence. After obtaining the vehicle body location, the control module of the UWB anchor outputs the vehicle body location to a vehicle control module.

A correspondence table between address information and vehicle body locations is set in advance. For example, when the pins include the first pin and the second pin, the correspondence between address information and vehicle body locations is shown in Table 1.

**Table 1**

| Module | First pin 1 | Second pin 1 | Address 1 address 2 | Vehicle body location |
|---|---|---|---|---|
| First UWB anchor | 0 V | 0 V | 00 | Left front of vehicle |
| Second UWB anchor | 0 V | 3.3 V | 01 | Right front of vehicle |
| Third UWB anchor | 3.3 V | 0 V | 10 | Left rear of vehicle |
| Fourth UWB anchor | 3.3 V | 3.3 V | 11 | Right rear of vehicle |

According to Table 1, after the address information is obtained, the vehicle body location obtained by looking up Table 1. For example, when the obtained address information of the first UWB anchor is 00, the obtained vehicle body location of the first UWB anchor is the left front of the vehicle.

Embodiment 1 of the present disclosure provides a UWB anchor calibration method, including: obtaining a level status of a pin of a UWB anchor; and determining a location of the UWB anchor according to the level status of the pin of the UWB anchor and a preset correspondence between the level status of the pin of the UWB anchor and the location of the UWB anchor, and outputting the location of the UWB anchor. By this technical solution, the self-identification of the location by the UWB anchor can be realized through the pin status. Because the pin status of the UWB anchor is used, there is no need to develop a plurality of anchors, the material management and control costs are saved, and calibration can be performed before the vehicle rolls off the assembly line. Compared with the related art, the wiring harness of the vehicle is simplified, wire materials required by anchors are saved, and there is no need to introduce a signal from a main control module or other module for judgment, thereby simplifying the circuit structure of the UWB anchor and reducing the costs of the vehicle.

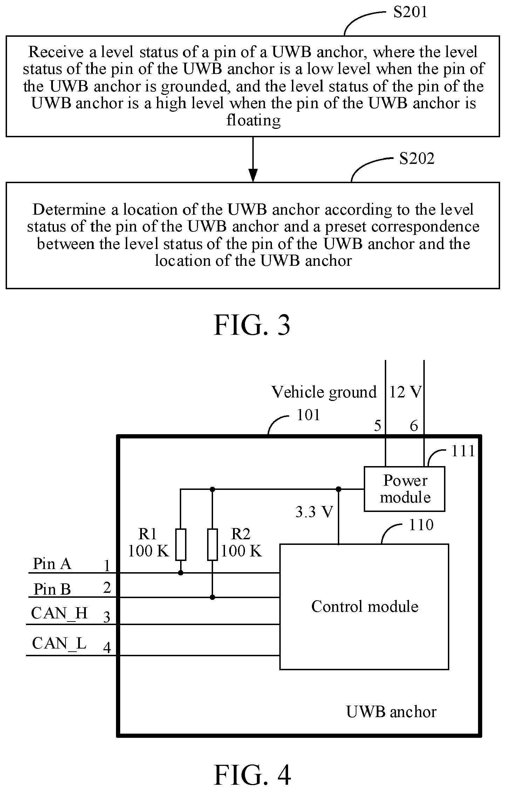

Embodiment 2 of the present disclosure provides a UWB anchor calibration method. As shown in FIG. 3, the UWB anchor calibration method includes the following steps.

In S201, a level status of a pin of a UWB anchor is received, where the level status of the pin of the UWB anchor is a low level when the pin of the UWB anchor is grounded, and the level status of the pin of the UWB anchor is a high level when the pin of the UWB anchor is floating.

As shown in FIG. 2, in an implementation, a UWB anchor 101 and a main control module 120 are arranged in a vehicle 10. This step is performed by the main control module 120 in the UWB anchor 10. The control module 110 is connected to the main control module 120. The control module 110 is connected to a pin L. The pin may be connected in different manners. For example, the pin is connected to a low level or a high level or is grounded. In other words, the level status of the pin may be a low level or a high level. Address data corresponding to the low level state is 0 and address data corresponding to the high level is 1.

Each UWB anchor includes a first pin and a second pin.

The level status of the pin of the UWB anchor is obtained by arranging a level status of the first pin and a level status of the second pin of the UWB anchor according to a preset order.

The number of pins may be two or more, and the preset order is an order of the pins arranged in advance. For example, the pins include the first pin and the second pin, and the preset order is that the level status of the first pin and the level status of the second pin are arranged sequentially. As such, address information is obtained. When the level status of the first pin is 0 and the level status of the second pin is 1, the address information is 01.

In step S202, a location of the UWB anchor is determined according to the level status of the pin of the UWB anchor and a preset correspondence between the level status of the pin of the UWB anchor and the location of the UWB anchor.

This step is the same as step S102, so the details will not be described herein again.

Embodiment 2 of the present disclosure provides a UWB anchor calibration method, including: receiving a level status of a pin of a UWB anchor; and determining a location of the UWB anchor according to the level status of the pin of the UWB anchor and a preset correspondence between the level status of the pin of the UWB anchor and the location of the UWB anchor, and outputting the location of the UWB anchor. By this technical solution, the self-identification of the location by the UWB anchor can be realized through the pin status. Because the pin status of the UWB anchor is used, there is no need to develop a plurality of anchors, the material management and control costs are saved, and calibration can be performed before the vehicle rolls off the assembly line. Compared with the related art, the wiring harness of the vehicle is simplified, wire materials required by anchors are saved, and there is no need to introduce a signal from a main control module or other module for judgment, thereby simplifying the circuit structure of the UWB anchor and reducing the costs of the vehicle.

Embodiment 3 of the present disclosure provides a UWB anchor. The UWB anchor includes a control module and a pin. The control module is connected to the pin.

The control module is configured to:
obtain a level status of the pin, obtain a vehicle body location corresponding to the UWB anchor according to the level status of the pin and a preset correspondence between the level status of the pin and a location of the UWB anchor, and output the vehicle body location corresponding to the UWB anchor. The level status of the pin of the UWB anchor is a low level when the pin of the UWB anchor is grounded, and the level status of the pin of the UWB anchor is a high level when the pin of the UWB anchor is floating.

As shown in FIG. 2, a UWB anchor includes a control module 110. The control module 110 is connected to a pin A, a pin B, and a CAN bus. The control module 110 obtains a level status of the pin A and a level status of the pin B, converts the level statuses into address data, arranges the address data in a preset order to obtain address information, obtains a vehicle body location of the UWB anchor according to the address information, and outputs the vehicle body location to a main control module through CAN bus.

For the level status of the pin, the control module is further configured to:
the level status of the pin of the UWB anchor is a low level when the pin of the UWB anchor is grounded, and the level status of the pin of the UWB anchor is a high level when the pin of the UWB anchor is floating.

As shown in FIG. 4, a UWB Anchor 101 includes a power module 111, a first resistor R1, and a second resistor R2. Pins include a first pin and a second pin. The first pin is a pin A, and the second pin is a pin B.

A power input end of the control module 110 is connected to an output end of the power module 111, a first end of the first resistor R1, and a first end of the second resistor R2. A first level signal input end of the control module 110 is connected to a second end of the first resistor R1 and the first pin. A second level signal input end of the control module 110 is connected to a second end of the second resistor R2 and the second pin.

When the pin A is grounded, the control module 110 receives a level status of the pin A, which is a low level, and obtains address data which is 0. When the pin B is floating, there is a voltage drop on the second resistor R2, and the control module 110 receives a level status of the pin A, which is a high level, and obtains address data which is 1.

A correspondence table between address information and vehicle body locations is set in advance. The correspondence between address information and vehicle body locations is shown in Table 1. According to Table 1, after the address information is obtained, the vehicle body location obtained by looking up Table 1. For example, when the obtained address information of the first UWB anchor is 01, the obtained vehicle body location of the first UWB anchor is the right front of the vehicle.

According to the UWB anchor provided in Embodiment 3 of the present disclosure, the control module in the UWB anchor obtains the level status of the pin, obtains the vehicle body location corresponding to the UWB anchor according to the level status of the pin and the preset correspondence between the level status of the pin and the location of the UWB anchor, and outputs the vehicle body location corresponding to the UWB anchor. In this technical solution, with the arrangement of the power module that is connected to the first pin through the first resistor and the second learning pin through the second resistor, the self-identification of the location by the UWB anchor can be realized through the pin status. Because the pin status of the UWB anchor is used, there is no need to develop a plurality of anchors, the material management and control costs are saved, and calibration can be performed before the vehicle rolls off the assembly line. Compared with the related art, the wiring harness of the vehicle is simplified, wire materials required by anchors are saved, and there is no need to introduce a signal from a main control module or other module for judgment, thereby simplifying the circuit structure of the UWB anchor and reducing the costs of the vehicle.

Embodiment 4 of the present disclosure provides a UWB anchor calibration system. The UWB anchor calibration system includes at least one UWB anchor of Embodiment 3 and a main control module.

Each UWB anchor is connected to the main control module by a CAN bus.

Each UWB anchor includes a control module. The control module is connected to the main control module through the CAN bus to send a detected vehicle body location to the main control module through the CAN bus.

Each UWB anchor includes a first pin and a second pin.

Each UWB anchor is configured to obtain a level status of the first pin and a level status of the second pin, arrange the level status of the first pin and the level status of the second pin from left to right to obtain address information, obtain a vehicle body location according to the address information, and output the vehicle body location to the main control module.

Embodiment 5 of the present disclosure provides a UWB anchor calibration system. The UWB anchor calibration system includes at least one UWB anchor and a main control module.

The UWB anchor obtains a level status of a pin and send the level status of the pin to the main control module. The level status of the pin of the UWB anchor is a low level when the pin of the UWB anchor is grounded, and the level status of the pin of the UWB anchor is a high level when the pin of the UWB anchor is floating.

The main control module obtains a vehicle body location corresponding to the UWB anchor according to the level status of the pin and a preset correspondence between the level status of the pin and a location of the UWB anchor.

The technical solutions of the present disclosure will be described in detail below through specific examples.

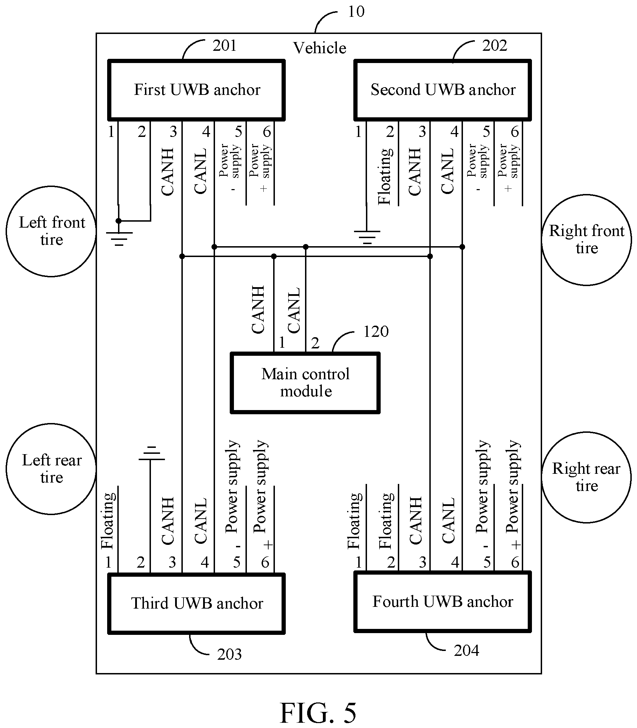

As shown in FIG. 5, a vehicle 10 includes a first UWB anchor 201, second UWB anchor 202, a third UWB anchor 203, a fourth UWB anchor 204, and a main control module 120. A 3.3 V power supply for a control module of each UWB anchor is used as a signal input of the circuit. The control module is internally set as a pull-up circuit by checking input signals of the pin 1 and the pin 2. When the pin A or B is grounded externally, the signal detected at the pin is a low level. When the pin is externally made floating, the signal detected at the pin 1 or 2 is a high level due to the pull-up of the internal 3.3 V circuit. In addition, the static power consumption of the module is ensured to be less than 1 mA by pulling up a resistor by at least greater than 100K. The control module of the first UWB anchor 201 obtains a level status of the pin 1, which is a low level (0 V), and converts the level status of the pin 1 to address data of 0. The control module of the first UWB anchor 201 obtains a level status of the pin 2, which is a low level (0 V), converts the level status of the pin 2 to address data of 0, arranges the address data in an order from the pin 1 to the pin 2 to obtain address information of 00, and obtains according to the correspondence table between the address information and the vehicle body locations (Table 1) that the vehicle body location of the first UWB anchor 201 is the left front of the vehicle. The control module sends the vehicle body location to the main control module 120. The control module of the second UWB anchor 202 obtains a level status of the pin 1, which is a low level (0 V), and converts the level status of the pin 1 to address data of 0. The control module of the second UWB anchor 202 obtains a level status of the pin 2, which is a high level (3.3 V), converts the level status of the pin 2 to address data of 1, arranges the address data in an order from the pin 1 to the pin 2 to obtain address information of 01, and obtains according to the correspondence table between the address information and the vehicle body locations (Table 1) that the vehicle body location of the second UWB anchor 202 is the right front of the vehicle. The control module sends the vehicle body location to the main control module 120. The control module of the third UWB anchor 203 obtains a level status of the pin 1, which is a high level (3.3 V), and converts the level status of the pin 1 to address data of 1. The control module of the third UWB anchor 203 obtains a level status of the pin 2, which is a low level (0 V), converts the level status of the pin 2 to address data of 0, arranges the address data in an order from the pin 1 to the pin 2 to obtain address information of 10, and obtains according to the correspondence table between the address information and the vehicle body locations (Table 1) that the vehicle body location of the third UWB anchor 203 is the left rear of the vehicle. The control module sends the vehicle body location to the main control module 120. The control module of the fourth UWB anchor 204 obtains a level status of the pin 1, which is a high level (3.3 V), and converts the level status of the pin 1 to address data of 1. The control module of the fourth UWB anchor 204 obtains a level status of the pin 2, which is a high level (3.3 V), converts the level status of the pin 2 to address data of 1, arranges the address data in an order from the pin 1 to the pin 2 to obtain address information of 11, and obtains according to the correspondence table between the address information and the vehicle body locations (Table 1) that the vehicle body location of the fourth UWB anchor 204 is the left front of the vehicle. The control module sends the vehicle body location to the main control module 120.

Another embodiment provides a computer-readable storage medium, storing a computer program. The computer program, when executed by a processor, implements the UWB anchor calibration method in the above embodiments.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, storage, database or other medium used in the embodiments provided in the present disclosure may include non-volatile and /or volatile memories. The non-volatile memory may include a read-only memory (ROM), a programmable ROM (PROM), an electrically programmable ROM (EPROM), an electrically erasable programmable ROM (EEPROM), or a flash memory. The volatile memory may include a RAM or an external cache. By way of description rather than limitation, the RAM may be obtained in a plurality of forms, such as a static RAM (SRAM), a dynamic RAM (DRAM), a synchronous DRAM (SDRAM), a double data rate SDRAM (DDRSDRAM), an enhanced SDRAM (ESDRAM), a synchlink (Synchlink) DRAM (SLDRAM), a rambus (Rambus) direct RAM (RDRAM), a direct rambus dynamic RAM (DRDRAM), and a rambus dynamic RAM (RDRAM).

A person skilled in the art can clearly understand that for convenience and brevity of description, the description is given by using the above division of functional units or modules as an example. In practical applications, the above functions may be assigned to be implemented by different functional units or modules according to needs, i.e., the internal structure of the apparatus may be divided into different functional units or modules to implement all or part of the functions described above.

The above embodiments are merely intended to illustrate, instead of limiting the technical solutions of the present disclosure. Although the present disclosure is described in detail by way of examples, it should be understood by those of ordinary skill in the art that modifications may be made to the technical solutions described in the embodiments, and equivalents may be substituted for some technical features, without essentially departing from the spirit and scope of the technical solution described in the embodiments of the present disclosure. All such modifications or substitutions fall within the scope of the present disclosure.

## Claims

1. An Ultra Wide Band (UWB) anchor calibration method, comprising:
obtaining a level status of a pin of a UWB anchor, the level status of the pin of the UWB anchor being a low level when the pin of the UWB anchor is grounded, and the level status of the pin of the UWB anchor being a high level when the pin of the UWB anchor is floating; and
determining a location of the UWB anchor according to the level status of the pin of the UWB anchor and a preset correspondence between the level status of the pin of the UWB anchor and the location of the UWB anchor, and outputting the location of the UWB anchor.

2. The UWB anchor calibration method according to claim 1, wherein each UWB anchor comprises a first pin and a second pin; and
the obtaining the level status of the pin of the UWB anchor comprises:
respectively obtaining a level status of the first pin and a level status of the second pin, and arranging the level status of the first pin and the level status of the second pin of the UWB anchor according to a preset order to obtain the level status of the pins.

3. An Ultra Wide Band (UWB) anchor calibration method, comprising:
receiving a level status of a pin of a UWB anchor, the level status of the pin of the UWB anchor being a low level when the pin of the UWB anchor is grounded, and the level status of the pin of the UWB anchor being a high level when the pin of the UWB anchor is floating; and
determining a location of the UWB anchor according to the level status of the pin of the UWB anchor and a preset correspondence between the level status of the pin of the UWB anchor and the location of the UWB anchor.

4. The UWB anchor calibration method according to claim 3, wherein each UWB anchor comprises a first pin and a second pin; and
the level status of the pin of the UWB anchor is obtained by arranging a level status of the first pin and a level status of the second pin of the UWB anchor according to a preset order.

5. An Ultra Wide Band (UWB) anchor, comprising a control module and a pin, the control module being connected to the pin; and
the control module being configured to:
obtain a level status of the pin, obtain a vehicle body location corresponding to the UWB anchor according to the level status of the pin and a preset correspondence between the level status of the pin and a location of the UWB anchor, and output the vehicle body location corresponding to the UWB anchor, the level status of the pin of the UWB anchor being a low level when the pin of the UWB anchor is grounded, and the level status of the pin of the UWB anchor being a high level when the pin of the UWB anchor is floating.

6. The UWB anchor according to claim 5, comprising a power module, a first resistor, and a second resistor, the pin comprising a first pin and a second pin,
a power input end of the control module being connected to an output end of the power module, a first end of the first resistor, and a first end of the second resistor, a first level signal input end of the control module being connected to a second end of the first resistor and the first pin, and a second level signal input end of the control module being connected to a second end of the second resistor and the second pin.

7. An Ultra Wide Band (UWB) anchor calibration system, comprising at least one UWB anchor according to claim 5 or 6 and a main control module,
each UWB anchor being connected to the main control module by a Controller Area Network (CAN) bus.

8. The UWB anchor calibration system according to claim 7, wherein each UWB anchor comprises a first pin and a second pin; and
each UWB anchor is configured to obtain a level status of the first pin and a level status of the second pin, and output the level status of the first pin and the level status of the second pin to the main control module.

9. An Ultra Wide Band (UWB) anchor calibration system, comprising at least one UWB anchor and a main control module,
the UWB anchor being configured to obtain a level status of a pin and send the level status of the pin to the main control module, the level status of the pin of the UWB anchor being a low level when the pin of the UWB anchor is grounded, and the level status of the pin of the UWB anchor being a high level when the pin of the UWB anchor is floating; and
the main control module being configured to obtain a vehicle body location corresponding to the UWB anchor according to the level status of the pin and a preset correspondence between the level status of the pin and a location of the UWB anchor.

10. A computer-readable storage medium storing a computer program which, when executed by a processor, implements the steps of the method according to any of claims 1 to 6.
